# EUROPEAN PATENT APPLICATION

(11) **EP 4 799 939 A1**
(43) Date of publication of application: **02.09.2026**
(21) Application number: 26158102.9
(22) Date of filing: 12.02.2026
(51) Int. Cl.: B64D 45/00, B64C 13/00, G05B 23/02

(54) **HIGH LIFT SYSTEM MONITORING ARRANGEMENT, ASSOCIATED HIGH LIFT SYSTEM, AIRCRAFT AND METHOD OF MONITORING A HIGH LIFT SYSTEM**

(30) Priority: 27.02.2025 DE 102025000718
(71) Applicant: Airbus Operations GmbH, 21129 Hamburg (DE)
(72) Inventor: Haserodt, Jan, 21129 Hamburg (DE)
(74) Representative: Airbus Germany

(57) **Abstract**

This High lift system monitoring arrangement (24) comprises:
- at least one sensor (32),
- a monitoring unit (34), connected to the at least one sensor (32), the monitoring unit (34) comprising:
+ an acquisition module (46), configured for acquiring an analogous sensed information (Al) from the at least one sensor (32),
+ a processing module (48), comprising a first processing circuitry (48A) and a second processing circuitry (48B), different from the first circuitry,
wherein the first processing circuitry (48A) is configured to process the analogous sensed information (Al) into a first digital sensor data (DD1), the second processing circuitry (48B) being configured to process the analogous sensed information (Al) into a second digital sensor data (DD2).

## Description

The present disclosure relates to a high lift system monitoring arrangement. The present disclosure also relates to a high lift system comprising such a high lift system monitoring arrangement. The disclosure further relates to an aircraft comprising such a high lift system arrangement. The disclosure further relates to a method of monitoring a high lift system using a high lift system monitoring arrangement as above mentioned.

In the domain of high lift systems for aircrafts, one knows using monitoring device, for example for ensuring that loads and/or displacements values in the high lift system remain nominal.

To that end, one knows for example using high lift system monitoring devices comprising sensors such as proximity switches, linear variable differential transformers (generally abbreviated LVDT), rotary variable differential transformers (generally abbreviated RVDT) synchros or resolvers. The previously mentioned sensors are known for their reliability but typically provide an analog connection to the rest of the high lift system and have accuracy limits.

In other technological fields, one also knows more compact and accurate sensors, but such sensors typically have a digital interface and comprise a processing circuitry which poses challenges due to certification requirements of the aviation industry for complex electronic hardware.

The above-mentioned prior art is therefore not entirely satisfying in that it has accuracy limitations and requires specific analog interfaces for its integration in the aircraft.

An object of the present invention is thus to provide a high lift monitoring system which allows the integration of more precise sensors simultaneously improving the interfacing of sensors and allowing for more precise measurement.

To this end, the invention relates to a high lift system monitoring arrangement comprising:
- at least one sensor,
- a monitoring unit, connected to the at least one sensor, the monitoring unit comprising:
   + an acquisition module, configured for acquiring an analogous sensed information from the at least one sensor,
   + a processing module, comprising a first processing circuitry and a second processing circuitry, different from the first circuitry,
wherein the first processing circuitry is configured to process the analogous sensed information into a first digital sensor data, the second processing circuitry being configured to process the analogous sensed information into a second digital sensor data.

The use of a processing module comprising different first processing circuitry and second processing circuitry to process in parallel the analogous sensed information into a first digital sensor data and a second digital sensor data is especially advantageous since this ensures limiting the impact of a potential error/failure in one of the processing circuitry, enabling a compliance of the sensing arrangement also for safety critical functions.

According to other advantageous aspects of the invention, the high lift system monitoring arrangement comprises one or more of the following features taken alone or according to all technically possible combinations:
- the first digital sensor data corresponds to the second digital sensor data;
- the monitoring unit further comprises a communication module, the communication module being configured to communicate an output data based on the first and/or second digital sensor data;
- the monitoring unit further comprises a controlling module, the controlling module being configured to control an actuation of the high lift system based on the first and/or second digital sensor data;
- the at least one sensor is a displacement sensor;
- the at least one sensor comprises a target, configured to be installed on a moveable portion of the high lift system, and an antenna, configured to be installed on a fixed portion of the high lift system;
- at least one of the target and of the antenna comprises a printed circuit board; and
- the high lift system monitoring arrangement comprises a plurality of sensors, the monitoring unit being connected to each sensor, the acquisition module being configured for acquiring an analogous sensed information from each of the sensors, the first processing circuitry being configured to process the analogous sensed information of each sensor into a respective first digital sensor data, the second processing circuitry being configured to process the analogous sensed information of each sensor into a respective second digital sensor data.

The invention also relates to high lift system comprising a high lift system monitoring arrangement as presented above.

The invention further relates to an aircraft comprising a high lift system as presented above.

The invention further relates to a method of monitoring a high lift system using a high lift system monitoring arrangement as presented above, wherein the method comprises the steps of:
- acquiring an analogous sensed information from the at least one sensor of the high lift system monitoring arrangement; and
- processing the analogous sensed information by the processing module of the monitoring unit of the high lift system monitoring arrangement, wherein the first processing circuitry of the processing module is configured to process the analogous sensed information into a first digital sensor data, the second processing circuitry being configured to process the analogous sensed information into a second digital sensor data.

The invention will be better understood when reading the following description, which is given solely by way of example and with reference to the appended drawings, in which:
- Figure 1 is a schematic view of an aircraft comprising a high lift system with a high lift system monitoring arrangement according to the invention; and
- Figure 2 is a schematic representation of a high lift system monitoring arrangement according to the invention.

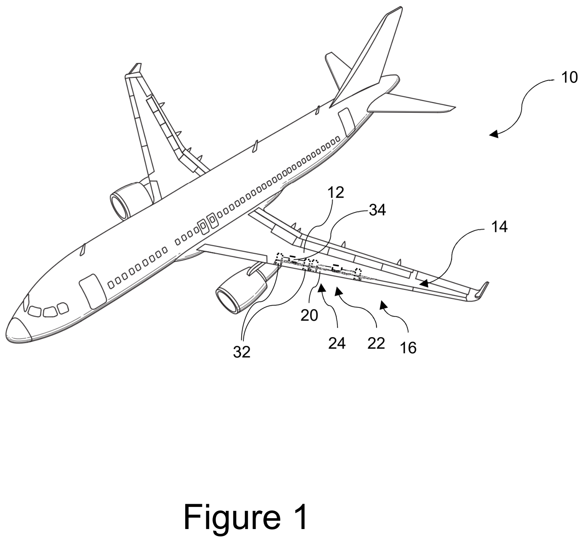

Referring to figure 1, an aircraft 10 comprises a fuselage 12 and wings 14.

The aircraft 10 is for example an airplane and is for example an airliner.

The aircraft 10 comprises a high lift system 16, for example arranged on the wings 14.

The high lift system 16 comprises in particular a wing body 18, a moveable surface 20 and a high lift system architecture 22. In the example illustrated on figure 1, the high lift system 16 comprises a plurality of moveable surfaces 20.

As visible from figure 1, the wing body 18 is for example a portion of the wing 14 which is fixed relative to the fuselage 12. In a non-illustrated example, the main body 14 corresponds to a main body of a foldable wing tip.

For example, and as visible from figure 1, the moveable surface 20 is a slat. In other words, in such an example, the high lift system 16 forms a leading-edge high lift system/device.

In other non-illustrated examples, the moveable surface 20 is a flap. In such non illustrated examples, the high lift system 16 may form a trailing-edge high lift system/device.

The moveable surface 20 is moveable relative to the wing body 18. For example, the moveable surface 20 is moveable between a stowed position and a deployed position, the moveable surface 20 being further away from the wing body 18 when it is in its deployed position than when it is in its stowed position.

The high lift system architecture 22 comprises a high lift system monitoring arrangement 24. In an example, the high lift system architecture 22 comprises at least one actuator 26.

The at least one actuator 26 comprises a fixed portion 28 and at least one moveable portion 30, the moveable portion 30 of the actuator being moveable relative to the fixed portion 28.

The at least one actuator 26 is for example configured for moving the moveable surface 20 relative to the wing body 18 between its stowed and deployed positions.

For example, the fixed portion 28 of the actuator 26 is fastened to the wing body 18 and the moveable portion 30 of the actuator 26 is connected to the moveable surface 20, for example such that a movement of the moveable portion 30 of the actuator 26 relative to the fixed portion 28 of the actuator 26 displaces the moveable surface 20 relative to the wing body 18.

For example, the actuator 26 comprises a Geared Rotary Actuator (generally abbreviated GRA), the fixed portion 28 corresponding for example to a housing of such GRA and the moveable portion 30 comprising for example to a rotary shaft of such GRA. The housing of such a GRA is for example fastened to the wing body 18 and the rotary shaft of such a GRA is for example configured to engage with a track (non-referenced) of the moveable surface 20.

In another example, the actuator comprises a linear actuator, the fixed portion 28 corresponding for example to a housing of such a linear actuator and the moveable portion 30 comprising for example a rotary shaft of such a linear actuator. The housing of such a linear actuator is for example fastened to the wing body 18 and the rotary shaft of such a linear actuator is for example configured to engage with a travelling nut (non-referenced) of the moveable surface 20.

The high lift system monitoring arrangement 24 comprises at least one sensor 32 and a monitoring unit 34. As schematically illustrated on the port wing 14 of figure 1, and for example, the high lift system monitoring arrangement 24 comprises a plurality of sensors 32. For example, and as illustrated in figure 1, the high lift system monitoring arrangement 24 further comprises a plurality of monitoring units 34.

The at least one sensor 32 is for example a displacement sensor. In other examples, the at least one sensor 32 is for example a load sensor.

The at least one sensor 32 comprises for example a target 36 and an antenna 38.

The target 36 is for example configured for being installed on a moveable portion 40 of the high lift system. For example, the moveable portion 40 of the high lift system corresponds to the moveable portion 30 of the actuator as above mentioned. In particular, in such an example, the target 36 is for example arranged on the rotary shaft of a GRA or linear actuator as above mentioned.

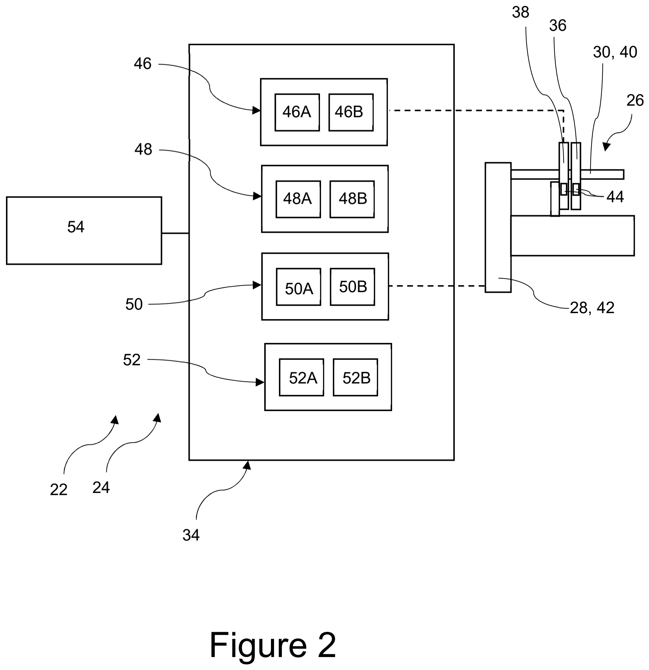

As understood from figure 2, in such an example, and for example, the target 38 of the sensor 32 forms a disk radially arranged around the rotary shaft, the target 38 being thus extending along an orthoradial and circular sensing direction.

In other examples, the target 36 is configured for being arranged on any other moveable portion 40 of the high lift system 16. In such other examples, the target 36 might be a linear target and might be elongated, for example along a linear sensing direction.

The antenna 38 is for example configured for being installed on a fixed portion 42 of the high lift system. For example, the fixed portion 42 of the high lift system corresponds to the fixed portion 28 of the actuator as above mentioned. In particular, in such an example, the antenna 38 is for example fastened/fixed to the housing of a GRA or linear actuator as above mentioned.

As understood from figure 2, in such an example, and for example, the antenna 38 of the sensor 32 forms a disk radially arranged around the rotary shaft, the antenna being thus extending along an orthoradial and circular sensing direction.

In other examples, the antenna 38 is configured for being arranged on any other fixed portion 42 of the high lift system 16. In such other examples, the antenna 38 might be a linear antenna and might be elongated, for example along a linear sensing direction.

As visible from figure 2, the target 36 and the antenna 38 are facing each other, for example for generating an analogous sensed information AI (which will be presented in more details later).

For example, a sensor 32 comprising a target 36 and an antenna 38 as above mentioned is forming an inductive encoder. In such an inductive encoder, relative displacement of the target 36 relative to the antenna 38 induces a change in a magnetic field sensed by the antenna 36, which transcribes/corresponds to the relative displacement of the target 36 relative to the antenna 38.

In such an example, the analogous sensed information AI corresponds for example to magnetic field value sensed by the sensor 32, and for example by the antenna 36. In alternative, the analogous sensed information AI corresponds to an analogous information derived from such magnetic field value, such as for example an analogous displacement value corresponding to the magnetic field value.

In other example, and for example when the sensor 32 differs from a sensor comprising a target 36 and an antenna 38 as above mentioned, the analogous sensed information AI corresponds to an analogous signal generated by the sensor 32, such as for example an analogous electric signal.

The analogous sensed information AI thus corresponds to an analogous signal sensed by the sensor 32, such signal being for example representative of a displacement and/or a load in the high lift system 16.

For example, the sensor 32 comprises at least one printed circuit board 44 (abbreviated PCB). The printed circuit board 44 is for example configured for generating the analogous sensed information AI.

For example, when the sensor 32 comprises a target 36 and an antenna 38 as above mentioned, at least one of the target 36 and the antenna 38 comprises a printed circuit board 44.

For example, the or each printed circuit board 44 is configured to emit and/or sense a magnetic field, such that the sensor 32 generates the analogous sensed information AI. In an example, the sensor 32 does not comprise any coil and relies on the printed circuit board 44 for emitting and/or sensing the magnetic field.

The monitoring unit 34 is connected to the at least one sensor 32. When the monitoring unit 34 comprises a plurality of sensors 32, and for example, the monitoring unit 34 is connected to each sensors 32.

In a further example, and as schematically illustrated on the port wing 14 of figure 1, the high lift system monitoring arrangement 24 comprises a plurality of monitoring units 34 (two monitoring units 34 being represented on figure 1), each monitoring unit 34 being connected to a plurality of sensors 32 (each monitoring unit 34 being presented connected with two sensors 32 on figure 1).

The monitoring unit 34 comprises an acquisition module 46 and a processing module 48. Furthermore, for example, and as illustrated in figure 2, the monitoring unit 34 further comprises a controlling module 50 and/or a communication module 52.

As this will be presented in more details later, the monitoring unit 34 is for example implemented in a Motor Control Electronic (abbreviated MCE) of the high lift system 16.

As illustrated from figure 2, the acquisition module 46 is configured for acquiring the analogous sensed information AI from the at least one sensor 32 to which the acquisition module 46 is connected.

For example, when the monitoring unit 34 is connected to a plurality of sensors 32, the acquisition module 46 is configured for acquiring analogous sensed information AI from each of the sensors 32.

The acquisition module 46 is for example connected with the or each sensor 32 with a discrete connection cable, illustrated in figure 2 but non-referenced.

In the example presented on figure 2, the acquisition module 46 comprises a first acquisition circuitry 46A and a second acquisition circuitry 46B, different from the first acquisition circuity. Both the first 46A and second 46B acquisition circuitries are for example configured for acquiring the analogous sensed information AI from the or each sensor(s) 32

The processing module 48 is configured to process the analogous sensed information AI.

The processing module 48 comprises in particular a first processing circuitry 48A and a second processing circuitry 48B, different from the first processing circuitry 48A.

In the example of figure 2, the first processing circuitry 48A is connected to the first acquisition circuitry 46A to receive the analogous sensed information AI from the first acquisition circuitry 46A and the second processing circuitry 48B is connected to the second acquisition circuitry 46B to receive the analogous sensed information AI from the second acquisition circuitry 46B.

In another non-represented example, the first acquisition circuitry 46A is connected to both the first 48A and second 48B processing circuitries and the second acquisition circuitry 46B is connected to both the first 48A and second 48B processing circuitries. In such an example, the first processing circuitry 48A is then for example configured to receive/preprocess the analogous sensed information AI from the first 46A and second 46B acquisition circuitries and the second processing circuitry 48B is configured to receive/preprocess the analogous sensed information AI from the first 46A and second 46B acquisition circuitry.

The processing module 48 is for example implemented in an MCE as above mentioned. For example, the MCE comprises two dissimilar and segregated electronic boards, using different electronic components, and designated as CON board and MON board. In such an example, the CON board comprises for example the first processing circuitry 48A and the MON board comprises the second processing circuitry 48B.

The first processing circuitry 48A is configured for processing the analogous sensed information AI into a first digital sensor data DD1. For example, the first processing circuitry 48A is configured for processing the analogous sensed information AI acquired by the first acquisition circuitry 46A into to first digital sensor data DD1.

In the example in which the acquisition module 46 is configured for acquiring an analogous sensed information AI from a plurality of sensors 32, the first processing circuitry 46A is for example configured to process the analogous sensed information AI of each sensor 32 into a respective first digital sensor data DD1.

In an example the first processing circuitry 48A only applies a digitalization on the analogous sensed information AI. In another example, the first processing circuitry 48A further processes the analogous sensed information AI, for example to convert an acquired current value (analogous sensed information AI) to a digital value corresponding to a position and/or a load in the high lift system 16 (first digital sensor data DD1).

The second processing circuitry 48B is configured for processing the analogous sensed information AI into a second digital sensor data DD2. For example, the second processing circuitry 48B is configured for processing the analogous sensed information AI acquired by the second acquisition circuitry 46B into to first digital sensor data DD1.

In the example in which the acquisition module 46 is configured for acquiring an analogous sensed information AI from a plurality of sensors 32, the second processing circuitry 46B is for example configured to process the analogous sensed information AI of each sensor 32 into a respective second digital sensor data DD2.

In an example the second processing circuitry 48B only applies a digitalization on the analogous sensed information AI. In another example, the second processing circuitry 48B further processes the analogous sensed information AI, for example to convert an acquired a current value (analogous sensed information AI) to a digital value corresponding to a position and/or a load in the high lift system 16 (second digital sensor data DD2).

The first digital sensor data DD1 corresponds for example to the second digital sensor data DD2. In particular, the first digital sensor data DD1 and the second digital sensor data DD2 result from similar transformation of the analogous sensed information AI, realized by different electronic components, that is by the first processing circuitry 48A and by the second processing circuitry 48B. In other words, the first digital sensor data DD1 and the second digital sensor data DD2 are only differing in that they are processed by different electronic components, these data being similar data for a normal functioning of the monitoring unit 34.

The controlling module 50 is for example configured to control an actuation of the high lift system 16 based on the first DD1 and/or second digital sensor data DD2.

As illustrated in figure 2, the controlling module 50 is for example connected to the at least one actuator 26. The controlling module 50 is for example configured for implementing a logic which, based on the first DD1 and/or second digital sensor data DD2, controls the at least one actuator 26.

The controlling module 50 is for example configured to compare the first DD1 and the second DD2 digital sensor data and to use one of the first DD1 or second DD2 data for controlling the at least one actuator 26, if the result of the comparison is below a predetermined threshold. The controlling module 50 is for example configured to generate an alert signal, for example to be displayed on human machine interface (non-represented) and/or to be transmitted to a flight control computer 54 of the aircraft, if the result of the comparison is superior or equal to the predetermined threshold.

In another non-illustrated example, and as understood below, the controlling is implemented in the flight control computer 54 of the aircraft. In such an example, the communication module 52 is for example configured to communicate an output data O corresponding to the first DD1 and second DD2 digital sensor data, such that the flight control computer implements a comparison of the first DD1 and the second DD2 digital sensor data as above described The flight control computer 54 is then for example configured to generate an alert signal, for example to be displayed on human machine interface (non-represented), if the result of the comparison is superior or equal to the predetermined threshold.

In an example, the controlling module 50 is configured to fuse the first DD1 and the second DD2 digital sensor data and to control the at least one actuator 26 based on such a fused data.

In addition, or in alternative, the controlling module 50 is connected to the acquisition module 46, and is configured to control the actuation of the high lift system 16, and for example of the at least one actuator 26, based on the acquired analogous sensed information AI.

In addition, or in alternative, the controlling module 50 is connected to the flight control computer 54 of the aircraft, for example through the communication module 52 as presented below.

The controlling module 50 is for example configured for receiving an actuation instruction from the flight control computer 54, such an actuation instruction being for example determined by the flight control computer based on the first DD1 and/or second DD2 digital sensor data.

In the example presented in figure 2, the controlling module 50 comprises a first controlling circuitry 50A and a second controlling circuitry 50B. In such an example, each controlling of the first 50A and second 50B controlling circuitry is for example configured for generating and/or receiving an actuation instruction, based on the first DD1 and/or second DD2 digital sensor data. The actuator 26 is for example configured for actuating the actuator 26 based on the actuation instruction generated and/or received by the first 50A and/or the second 50B controlling circuitry. In other non-illustrated examples, the controlling module 50 comprises a single circuitry, connected to the first processing circuitry 48A and to the second processing circuitry 48B and for example configured for controlling the actuation based on the first DD1 and/or second digital sensor data DD2.

The communication module 52 is for example configured to communicate an output data O based on the first DD1 and/or second DD2 digital sensor data.

For example, the communication module 52 is connected to the processing module 48 and configured for obtaining the first DD1 and/or second DD2 digital sensor data from the processing module 48.

The communication module 54 is configured to generate an output data O based on the first DD1 and/or second DD2 digital sensor data. In an example, the output data O results of the first DD1 and second DD2 digital sensor data.

The communication module 52 is for example connected to the flight control computer 54 of the aircraft, the communication module 52 being configured for transmitting the output data O to the flight control computer 54.

In an example, the communication module 52 is configured to communicate the output data O and/or an actuation instruction of the flight control computer 54, to the controlling module 50.

In the example presented in figure 2, the communication module 52 comprises a first communication circuitry 52A and a second communication circuitry 52B. In an example, the output data O comprise the first DD1 and second DD2 digital sensor data.

In other examples, the communication module 52 comprises a single circuitry. In such examples, and as above mentioned, the communication module 52 is for example configured to fuse the first DD1 and second DD2 digital sensor data into the output data O.

One understands that during data fusion, incoherent first DD1 or second DD2 digital are for example excluded for the generation of the output data O.

For example, and as presented in figure 2, the acquisition module 46, the processing module 48, the controlling module 50 and the communication module 52 are each implemented as analog signal processing/data storing devices.

In particular, in the example of figure 2, the first acquisition circuitry 46A, the first processing circuitry 48A, the first controlling circuitry 50A and the first communication circuitry 52A are implemented on an electronic board, and in particular on a CON board of a MCE. In the example of figure 2, the second acquisition circuitry 46B, the second processing circuitry 48B, the second controlling circuitry 50B and the second communication circuitry 52B are implemented on an electronic board, and in particular on a MON board of a MCE.

In a variant (not shown), the acquisition module 46, the processing module 48, the controlling module 50 and the communication module 52 are each produced in the form of a programmable logic components, such as a FPGA (Field Programmable Gate Array), or in the form of a dedicated integrated circuit, such as an ASIC (Application Specific Integrated Circuit), or in the form of any combination of ASIC, FPGA and/or software. In such a variant, the processing module 48, and for example the acquisition module 46, the controlling module 50 and the communication module 52 each comprise two dissimilar and segregated programmable logic components, dedicated integrated circuit or combination of ASIC, FPGA and/or software.

A method of monitoring a high lift system using a high lift system monitoring arrangement as above described will now be presented.

In an acquiring step, an analogous sensed information AI is acquired from the at least one sensor 26 of the high lift system monitoring arrangement 24. In particular, the acquisition module 46 is acquiring the analogous sensed information AI for the at least one sensor 26.

In a processing step, the analogous sensed information AI is processed by the processing module 48. In particular, during the processing step, the first processing circuitry 48A processes the analogous sensed information into a first digital sensor data DD1 and the second processing circuitry 48B processes the analogous sensed information into a second digital sensor data DD2.

A high lift system monitoring arrangement 24 as above presented, and in particular in which two distinct processing circuitry 48A, 48B are configured to process the analogous sensed information AI into first DD1 and second DD2 digital sensor data, is especially relevant to relevant to perform safety critical functions of the high lift system monitoring arrangement.

Having a communication module 52 being configured to communicate an output data O based on the first DD1and/or second DD2 digital sensor data is especially relevant to improve integration of the monitoring arrangement 24 without compromising its safety.

Having a monitoring unit 34 comprising a controlling module 50 configured to control an actuation of the high lift system 16 based on the first DD1 and/or second digital sensor data DD2 is especially advantageous, in particular since it allows for example decentralizing the controlling of the high lift system 16, further improving the controlling of the high lift system 16.

The use of a sensor 32 as above described, for example a displacement sensor, and in particular a sensor 32 having a target 36 and an antenna 38, for example equipped with a printed circuit board 44, is especially advantageous for accuracy on the analogous sensed information AI, and ultimately on the first DD1 and second DD2 digital sensor data.

A high lift system monitoring arrangement 24 as above presented in which the monitoring arrangement 24 comprises a plurality of sensors 32 and in which the monitoring unit 34 is connected to each sensor 32 and processes the sensed information AI of each sensor into a first DD1 and a second DD2 digital sensor data is especially advantageous for making the monitoring arrangement 24 efficient, without compromising its accuracy.

### REFERENCE SIGNS:

- 10: aircraft
- 12: fuselage
- 14: wing
- 16: high lift system
- 18: wing body
- 20: moveable surface
- 22: high lift system architecture
- 24: high lift system monitoring arrangement
- 26: actuator
- 28: fixed portion of the actuator
- 30: moveable portion of the actuator
- 32: sensor
- 34: monitoring unit
- 36: target
- 38: antenna
- 40: moveable portion of the high lift system
- 42: fixed portion of the high lift system
- 44: printed circuit board
- 46: acquisition module
- 46a: first acquisition circuitry
- 46b: second acquisition circuitry
- 48: processing module
- 48a: first processing circuitry
- 48b: second processing circuitry
- 50: controlling module
- 50a: first controlling circuitry
- 50b: second controlling circuitry
- 52: communication module
- 52a: first communication circuitry
- 52b: second communication circuitry
- 54: flight control computer
- AI: analogous sensed information
- DD1: first digital sensor data
- DD2: second digital sensor data
- O: output data

## Claims

1. High lift system monitoring arrangement (24) comprising:
- at least one sensor (32),
- a monitoring unit (34), connected to the at least one sensor (32), the monitoring unit (34) comprising:
+ an acquisition module (46), configured for acquiring an analogous sensed information (AI) from the at least one sensor (32),
+ a processing module (48), comprising a first processing circuitry (48A) and a second processing circuitry (48B), different from the first circuitry,
wherein the first processing circuitry (48A) is configured to process the analogous sensed information (AI) into a first digital sensor data (DD1), the second processing circuitry (48B) being configured to process the analogous sensed information (AI) into a second digital sensor data (DD2).

2. High lift system monitoring arrangement (24) according to claim 1, wherein the first digital sensor data (DD1) corresponds to the second digital sensor data (DD2).

3. High lift system monitoring arrangement (24) according to claims 1 or 2, wherein the monitoring unit (34) further comprises a communication module (52), the communication module (52) being configured to communicate an output data (O) based on the first (DD1) and/or second (DD2) digital sensor data.

4. High lift system monitoring arrangement (24) according to any of the preceding claims, wherein the monitoring unit (34) further comprises a controlling module (50), the controlling module (50) being configured to control an actuation of the high lift system (16) based on the first (DD1) and/or second (DD2) digital sensor data.

5. High lift system monitoring arrangement (24) according to any of the preceding claims, wherein the at least one sensor (32) is a displacement sensor.

6. High lift system monitoring arrangement (24) according to claim 5, wherein the at least one sensor (32) comprises a target (36), configured to be installed on a moveable portion (40) of the high lift system (16), and an antenna (38), configured to be installed on a fixed portion (42) of the high lift system (16).

7. High lift system monitoring arrangement (24) according to claim 6, wherein at least one of the target (36) and of the antenna (38) comprises a printed circuit board (44).

8. High lift system monitoring arrangement (24) according to any of the preceding claims, wherein the high lift system monitoring arrangement (24) comprises a plurality of sensors (32), the monitoring unit (34) being connected to each sensor (32), the acquisition module (46) being configured for acquiring an analogous sensed information from each of the sensors (32), the first processing circuitry (48A) being configured to process the analogous sensed information (AI) of each sensor (32) into a respective first digital sensor data (DD1), the second processing circuitry (48B) being configured to process the analogous sensed information (AI) of each sensor (32) into a respective second digital sensor data (DD2).

9. High lift system (16) comprising a high lift system monitoring arrangement (24) according to any of the claims 1 to 8.

10. Aircraft (10) comprising a high lift system (16) according to claim 9.

11. Method of monitoring a high lift system (16) using a high lift system monitoring arrangement (24) according to any of the claims 1 to 8, wherein the method comprises the steps of:
- acquiring an analogous sensed information (AI) from the at least one sensor (32) of the high lift system monitoring arrangement (24); and
- processing the analogous sensed information (AI) by the processing module (48) of the monitoring unit (34) of the high lift system monitoring arrangement (24), wherein the first processing circuitry (48A) of the processing module (48) is configured to process the analogous sensed information (AI) into a first digital sensor data (DD1), the second processing circuitry (48B) being configured to process the analogous sensed information (AI) into a second digital sensor data (DD2).
